# EUROPÄISCHE PATENTSCHRIFT

(11) **EP 3 174 703 B1**
(45) Veröffentlichungstag und Bekanntmachung des Hinweises auf die Patenterteilung: **03.06.2020**
(21) Anmeldenummer: 15750660.1
(22) Anmeldetag: 29.07.2015
(51) Int. Cl.: B32B 1/08, F16L 55/165, B32B 5/02, B32B 5/22, B32B 5/26, B32B 7/12, B32B 25/04, B32B 27/06, B32B 27/08, B32B 27/12, B32B 27/30, B32B 27/32, B32B 27/34

(54) **AUSKLEIDUNGSSCHLAUCH ZUR SANIERUNG FLUIDFÜHRENDER LEITUNGSSYSTEME**
TUBULAR LINER FOR THE REHABILITATION OF FLUID-CONDUCTING PIPELINE SYSTEMS
CHEMISE DESTINÉE À LA RÉNOVATION DE SYSTÈMES DE CONDUITES DE FLUIDES

(30) Priorität: 31.07.2014 DE 102014110929
(43) Veröffentlichungstag der Anmeldung: 07.06.2017
(73) Patentinhaber: SML Verwaltungs GmbH, 76865 Rohrbach (DE)
(72) Erfinder: REICHEL, Stefan, 67098 Bad Dürkheim (DE); NOLL, Christian, 67117 Limburgerhof (DE)
(74) Vertreter: Dr. Langfinger & Partner
(86) Internationale Anmeldenummer: PCT/EP2015/067447
(87) Internationale Veröffentlichungsnummer: WO 2016/016347

(56) Entgegenhaltungen:
- EP-A1- 0 510 306
- DE-A1- 4 445 166
- DE-A1-102011 105 592
- Izeg Informationszentrum ET AL: "Planung und Ausführung von Entwässerungsanlagen für Gebäude und Grundstücke", , 17 May 2014 (2014-05-17), XP055587979, Retrieved from the Internet: URL:https://ecitydoc.com/download/izeg-tec h-info-2014_pdf [retrieved on 2019-05-13]

## Beschreibung

Die vorliegende Erfindung betrifft eine Verwendung einer nahtlosen schlauchförmigen Innenfolie in einem Auskleidungsschlauch zur Sanierung druckbelasteter Leitungssysteme zum Transport fluider Medien.

Verfahren zur Sanierung von Leitungssystemen, in denen zum Beispiel flüssige oder gasförmige Medien transportiert werden, sind im Stand der Technik bekannt und vielfach beschrieben.

Beispielsweise sind Verfahren bekannt, bei denen die einen Defekt oder eine Beschädigung aufweisenden Abschnitte des Leitungssystems durch neue Abschnitte ersetzt werden. Dies ist jedoch aufwändig und auch nicht immer möglich.

Des weiteren sind Verfahren im Stand der Technik bekannt, bei denen zur Sanierung von Leitungssystemen, z.B. von Kanälen und ähnlichen Rohrsystemen, ein flexibler, mit einem härtbaren Harz getränkter Faserschlauch, der als Auskleidungsschlauch (auch als Liner bezeichnet), dient, in das Leitungssystem eingeführt wird. Nach dem Einführen wird der Auskleidungsschlauch aufgeweitet, so dass er sich eng an die Innenwand des zu sanierenden Leitungssystems anschmiegt. Anschließend wird das Harz ausgehärtet.

Die Herstellung eines derartigen Auskleidungsschlauches ist beispielsweise in der WO 95/04646 beschrieben. Ein solcher Auskleidungsschlauch weist üblicherweise eine lichtundurchlässige äußere Schutzfolie, eine mindestens für bestimmte Wellenlängenbereiche elektromagnetischer Strahlung durchlässige Innenfolie sowie ein mit einem Harz getränktes Faserband auf, das zwischen der Innenfolie und der Außenfolie angeordnet ist.

Der Außenfolienschlauch soll verhindern, dass das zur Imprägnierung verwendete Harz aus dem Faserschlauch austritt und in die Umwelt gelangt. Dies setzt eine gute Dichtigkeit und Anbindung des äußeren Folienschlauchs an den harzgetränkten Faserschlauch voraus.

Aus der WO 00/73692 A1 ist ein Auskleidungsschlauch bekannt, umfassend einen Innenfolienschlauch, ein mit einem Harz getränktes Faserband und einen Außenfolienschlauch, der an seiner Innenseite (d.h. der dem harzgetränkten Faserband zugewandten Seite) mit einem Faservlies kaschiert ist.

Oftmals werden zur Herstellung solcher Auskleidungsschläuche auf einen Innenfolienschlauch harzgetränkte Faserbänder schraubenförmig und überlappend aufgewickelt. Der Außenfolienschlauch wird anschließend ebenfalls schraubenförmig und überlappend um den harzgetränkten Faserschlauch gewickelt.

Der Innenschlauch selbst wird dabei zur vereinfachten Herstellung auch um einen Wickeldorn gewickelt. Alternativ offenbart beispielsweise WO 95/04646, dass ein vorgefertigter Innenfolienschlauch aufgeblasen werden und selbst als Wickeldorn dienen kann. Ein solcher vorgefertigter Innenfolienschlauch wird dabei aus einem Folienband hergestellt, dessen Folienränder miteinander durch Schweißen oder Kleben miteinander verbunden werden, um den Innenfolienschlauch zu bilden.

Aus der EP0510306 A1 ist ein Verfahren zur Herstellung eines armierten, härtbaren Kunststoffschlauches bekannt, bei dem der um einen Folienschlauch gelegte Faseraufbau in der Tränkwanne ohne Lufteinschluß von Deckfolien umhüllt wird, deren Ränder gleichzeitig miteinander verschweißt werden.

Für einen Einsatz von Auskleidungsschläuchen in druckbelasteten fluidführenden Leitungssystemen ist es jedoch nachteilig, gewickelte oder gemäß dem Stand der Technik aus einem durch Schweißen oder Verkleben aus einem Folienband hergestellte Innenfolienschläuche einzusetzen.

Bei den bekannten Innenfolienschläuchen stellen die Naht- bzw. Verbindungsstellen bzw. beim Wickeln die Überlappungsbereiche des Folienbands eine Schwachstelle dar, die oftmals nur durch zusätzliche Dichtungselemente ausreichend abgedichtet werden kann. Zudem hat es sich als nachteilig erwiesen, dass an der Nahtstelle der Schweißnaht oder der Klebestellen eine erhöhte Keimbildung auftreten kann und diese Stellen den Strömungswiderstand erhöhen.

In den vorstehend genannten und im Stand der Technik beschriebenen Systemen wird der innere Folienschlauch nach Einbau in das zu sanierende fluidführende System wieder entfernt, d.h. herausgezogen. Dies setzt voraus, dass es beim Aushärten nicht zu einer Anbindung oder Verknüpfung des inneren Folienschlauchs mit den harzgetränkten Faserbändern kommt, weil ansonsten das Herausziehen des inneren Folienschlauchs zu Beschädigungen der inneren Oberfläche der ausgehärteten Auskleidungsschläuche führen kann, wenn der Folienschlauch an den harzgetränkten Lagen angebunden ist. Dies kann zu Undichtigkeiten und Instabilitäten des ausgehärteten Auskleidungsschlauchs führen.

Bei thermisch härtenden Systemen wurden auch bereits Innenfolienschläuche mit Faserkaschierung eingesetzt; dabei wurden die Innenfolienschläuche durch Zusammenlegen der Längskanten einer Flachfolie oder durch Wickeln einer faserkaschierten Längsfolie erhalten. Bei photochemisch härtbaren Systemen hat dies jedoch den Nachteil, dass die Durchlässigkeit des Innenfolienschlauchs für die zur Aushärtung verwendete Strahlung negativ beeinträchtigt wird, was zu Problemen bei der Aushärtung führen kann. Zudem kann die Faserkaschierung nicht flächendeckend auf der Folie aufgebracht werden, weil das Verkleben der Ränder der verstärkten Folien erschwert oder unmöglich ist, wenn sich dort eine Kaschierung befindet. Im Ergebnis wird damit ein kaschierter Folienschlauch erhalten, der nicht kaschierte Bereiche aufweist, was zu Inhomogenitäten und einer Reihe von damit verbundenen Problemen führen kann.

Aus der DE 10 2011 105 995 sind Auskleidungsschläuche zur Sanierung von fluidführenden Systemen mit
a) mindestens einem inneren Folienschlauch auf der Basis eines thermoplastischen Kunststoffs,
b) mindestens einem äußeren Folienschlauch auf der Basis eines thermoplastischen Kunststoffs und
c) mindestens einem mit einem photochemisch härtbaren Harz getränkten Faserschlauch zwischen mindestens einem inneren und mindestens einem äußeren Folienschlauch, wobei mindestens ein innerer Folienschlauch, der mit mindestens einem mit einem photochemisch härtbaren Harz getränkten Faserschlauch in Berührung steht, auf der im eingebauten Zustand dem Faserschlauch zugewandten Oberfläche funktionelle Gruppen aufweist, die eine Reaktion mit dem Faserschlauch eingehen, bekannt. Die Innenfolienschläuche werden durch Wickeln oder durch Zusammenlegen der Längskanten von Flachfolien erhalten.

Demzufolge lag der vorliegenden Erfindung die Aufgabe zugrunde, die Nachteile des Stands der Technik zu überwinden und einen Auskleidungsschlauch zur Sanierung von druckbelasteten fluidführenden Leitungssystemen zur Verfügung zu stellen, der eine gute Dichtigkeit, eine reduzierte Keimbildung und einen verbesserten Durchflusswiderstand ermöglicht.

Die Aufgabe der vorliegenden Erfindung wird gelöst durch eine Verwendung mindestens einer nahtlosen schlauchförmigen Innenfolie in einem Auskleidungsschlauch mit mindestens einer unmittelbar oder mittelbar auf der schlauchförmigen Innenfolie aufgebrachten aushärtbaren Lage aus mindestens einem mit härtbaren Harz getränkten Faserband, wobei die Innenfolie auf der dem harzgetränkten Faserband im eingebauten Zustand zugewandten Oberfläche funktionelle Gruppen und/oder eine Verstärkung aufweist zur Sanierung druckbelasteter Leitungssysteme, die bei einem Druck betrieben werden, der über atmosphärischem Druck liegt, zum Transport fluider Medien, wobei die Innenfolie eine Mehrschichtverbundfolie ist, die eine Folienstärke von 100 bis 1000 µm aufweist. Der nahtlose innere Folienschlauch steht also in mittelbarem oder unmittelbarem Kontakt mit der aushärtbaren Lage.

Dabei ist insbesondere die Verwendung der erfindungsgemäßen Innenfolie für die Sanierung von Druckleitungen für Wasser oder Abwasser oder für die Sanierung von Druckrohrleitungen in industriellen Produktionsbetrieben bevorzugt.

Mittelbar in Kontakt stehen soll im Rahmen der vorliegenden Erfindung dahingehend verstanden werden, dass der Kontakt auch über zwischengeschaltete weitere Elemente erfolgen kann, die einerseits den Innenfolienschlauch anbinden und andererseits selbst an das harzgetränkte Faserband bzw. die harzgetränkten Faserbänder gebunden sind.

Durch eine nahtlose Innenfolie bzw. einen nahtlosen Innenfolienschlauch wird eine hohe Dichtigkeit derselben bzw. desselben sowie eine reduzierte Keimbildung aufgrund fehlender Nahtstellen erreicht. Zudem wird im Inneren des Auskleidungsschlauchs der Durchflusswiderstand verringert.

Nach Aushärtung der Auskleidungsschläuche im Leitungssystem sollen diese möglichst dicht sein. Bei einer Dichtigkeitsprüfung nach DIN EN 1610 (1997), Kapitel 13.2, Verfahren L (Prüfung mit Luft) darf bei einem Auskleidungsrohr gemäß dem Stand der Technik bei einem Druck von 200 mbar und einer vom Durchmesser bzw. der Dicke abhängigen Prüfzeit im Bereich von 1,5 bis 5 min ein Druckverlust von max. 15 mbar festgestellt werden. Dieser Druckverlust entspricht einer Dichtigkeit der Auskleidungsschläuche, die für viele Anwendungsbereiche ausreichend ist.

Unter fluidführenden druckbelasteten Leitungssystemen im Sinne der vorliegenden Erfindung sollen Leitungssysteme jeglicher Art zum Transport von flüssigen oder gasförmigen Medien verstanden werden, die bei einem Druck betrieben werden, der über dem atmosphärischen Druck liegt. Beispielhaft seien hier Pipelines jeglicher Art, Rohrleitungssysteme zum Transport von Medien in chemischen Betrieben und Produktionsanlagen, Druckwasserrohre und Trinkwasserrohre oder Abwassersysteme genannt, die unterirdisch bzw. nicht sichtbar verlegt sind.

Grundsätzlich eignen sich zur Herstellung des erfindungsgemäß eingesetzten nahtlosen Innenfolienschlauchs alle polymeren Materialien, aus denen Folien hergestellt werden können. Bei der Verwendung photochemisch härtbarer Harze in den Faserbändern sollte der Innenfolienschlauch eine ausreichende Durchlässigkeit für die zur Aushärtung verwendete Strahlung aufweisen.

Eine erste Gruppe bevorzugter Polymerer sind beispielsweise Homo- oder Copolymere von Olefinen, insbesondere von α-Olefinen mit vorzugsweise 2 bis 8, insbesondere 2-6 C-Atomen. Besonders bevorzugte Monomere sind Ethen, Propen und Octen, wobei letzteres sich auch gut mit Ethen copolymerisieren läßt.

Als Comonomere für die erwähnten Olefine kommen insbesondere Alkylacrylate oder Alkylmethacrylate, die sich von Alkoholen mit 1 bis 8 C-Atomen ableiten, z.B. Ethanol, Butanol oder Ethylhexanol, um nur einige bevorzugte Beispiele zu nennen, in Betracht.

In manchen Fällen haben sich sogenannte funktionalisierte EPDM-Kautschuke als vorteilhaft erwiesen, die wegen ihrer elastischen Eigenschaften Vorteile bei dem Inanlagebringen des Auskleidungsschlauchs mit sich bringen können.

Geeignete Polymere sind weiterhin solche aus vinylaromatischen Monomeren und Dienen, beispielsweise Styrol und Dienen, wobei die Diene ganz oder teilweise hydriert sein können, die entsprechende funktionelle Gruppen aufweisen. Solche Copolymere können statistisch aufgebaut sein oder eine Blockstruktur aufweisen, wobei auch Mischformen möglich sind (sog. tapered-Strukturen). Entsprechende Produkte sind in der Literatur beschrieben und kommerziell von verschiedenen Anbietern erhältlich. Als Beispiele seien die kommerziellen Produktreihen Styrolux® und Styroflex® der BASF SE genannt.

Es hat sich herausgestellt, dass Mehrschichtverbundfolien als Innenfolienschläuche Vorteile hinsichtlich der Festigkeit mit sich bringen, weshalb derartige Folien mit einer Folienstärke von 100 bis 1000 µm eingesetzt werden.

Erfindungsgemäß ist besonders bevorzugt, dass die mindestens eine schlauchförmige Innenfolie eine Mehrschichtverbundfolie auf der Basis von Olefinhomo- oder -copolymeren oder eine Mehrschichtverbundfolie aus diesen Polymeren und Polyamiden ist und/oder die Innenfolie eine Folienstärke von 100 bis 500 µm und besonders bevorzugt von 100 bis 300 µm aufweist.

Es hat sich gemäß einer weiteren Ausführungsform der Erfindung gezeigt, dass es vorteilhaft ist, wenn der Innenfolienschlauch eine Barriereschicht aufweist. Unter Barriereschicht ist dabei eine Schicht zu verstehen, die die Permeation von Komponenten des zur Tränkung der Faserbänder verwendeten Harzes oder des Harzes selbst oder von Lösungsmitteln für das Harz verringert oder verhindert. Ein Austritt dieser Harzkomponenten oder des Harzes selbst aus der inneren Oberfläche des Innenfolienschlauchs in den Raum, in dem das zu transportierende Medium fließt, ist generell unerwünscht - im Falle von Trinkwasserleitungen sind z.B. sehr geringe zulässige Grenzwerte definiert, die eingehalten werden müssen.

So kann erfindungsgemäß vorgesehen sein, dass mindestens eine der Schichten einer bevorzugt verwendeten Mehrschichtverbundfolie als Innenfolienschlauch oder eine einlagige Innenfolie eine Barriereschicht umfasst, die eine Diffusion von Styrol verhindert oder reduziert (Styrol wird häufig als Lösungsmittel oder Reaktivverdünner in den zur Tränkung der Faserbänder verwendeten Harzen eingesetzt). Geeignete Folienmaterialien sind dem Fachmann an sich bekannt und in der Literatur beschrieben

Die Sperrwirkung einer Folie gegenüber einer bestimmten Substanz hängt unmittelbar vom Diffusionskoeffizienten der entsprechenden Substanz, der Dicke der Folie und dem Druckunterschied auf beiden Seiten der Folie ab. Eine ausreichende Sperrwirkung wird dann erreicht, wenn die innerhalb von 24 h durch die Folie diffundierende Menge des in Rede stehenden Stoffs einen vorgegebenen Grenzwert nicht übersteigt. Einschlägige Grenzwerte für die maximal erlaubte Durchlässigkeit oder Permeabilität hängen dabei unter anderem davon ab, ob es sich bei den zu sanierenden Leitungssystemen um Systeme zum Transport von Lebensmitteln oder zum Transport von Trinkwasser handelt, wo sehr niedrige Grenzwerte erreicht werden müssen. Der Fachmann wird demzufolge die passende Folie entsprechend der vorgegebenen Grenzwerte der Anwendung auf der Basis seines allgemeinen Fachwissens auswählen.

Nur stellvertretend seien hier als erste Gruppe Polyolefinfolien oder Verbundfolien aus Polyolefinen und Polyamiden genannt, die eine gute Sperrwirkung gegen das häufig als Lösungsmittel in den zur Tränkung verwendeten Harzen enthaltene Styrol aufweisen.

Dabei sind als Polyamide z.B. die Produkte der Kondensation von einer oder mehreren Aminocarbonsäuren, wie Aminocapronsäure, Amino-7-heptansäure, Amino-11-undecan-säure und Amino-12-dodecansäure, oder einem oder mehreren Lactamen, wie Caprolactam, Oenantholactam und Lauryllactam und/oder einem oder mehreren Salzen oder Mischungen von Diaminen, wie Hexamethylendiamin, Dodecamethy-lendiamin, Metaxylylendiamin, Bis-p(aminocyclohexyl)methan und Trimethylhexamethylendiamin, mit Disäuren, wie Isophthalsäure, Terephthalsäure, Adipinsäure, Azelainsäure, Suberinsäure, Sebacinsäure und Dodecandicarbonsäure zu nennen.

Weiter erwähnt seien Copolyamide, die sich aus der Kondensation von mindestens zwei alpha,omega-Aminocarbonsäuren oder zwei Lactamen oder einem Lactam und einer alpha,omega-Aminocarbonsäure ergeben. Angeführt seien weiterhin die Copolyamide, die sich aus der Kondensation von mindestens einer alpha,omega-Aminocarbonsäure (oder eines Lactams), mindestens eines Diamins und mindestens einer Dicarbonsäure ergeben.

Als Beispiele für Lactame seien diejenigen angeführt, die im Hauptring 3 bis 12 Kohlenstoffatome enthalten und gegebenenfalls substituiert sein können. Genannt seien beispielsweise ß,ß-Dimethylpropriolactam, a,a-Dimethylpropriolactam, Amylolactam, Caprolactam, Capryllactam und Lauryllactam. Als Beispiele für alpha,omega-Aminocarbonsäuren seien Aminoundecansäure und Aminododecan-säure genannt. Als Beispiele für Dicarbonsäuren seien Adipinsäure, Sebacinsäure, Isophthalsäure, Butandi-säure, 1,4-Cyclohexyldicarbonsäure, Terephthalsäure, das Natrium- oder Lithiumsalz von Sulfoisophthalsäure, Dimerfettsäuren (diese Dimerfettsäuren haben einen Dimergehalt von mindestens 98% und sind vorzugsweise hydriert) und Dodecandisäure HOOC-(CH2)10-COOH genannt. Bei dem Diamin kann es sich um ein aliphatisches Diamin mit 6 bis 12 Atomen oder ein Aryldiamin und/oder ein gesättigtes cyclisches Diamin handeln. Als Beispiele seien Hexamethylendiamin, Piperazin, Tetramethylendiamin, Octamethylendiamin, Decamethylendiamin, Dodecamethylendiamin, 1,5-Diaminohexan, 2,2,4-Trimethy1-1,6-diaminohexan, Diaminpolyole, Isophorondiamin (IPD), Methylpentamethylendiamin (MPDM), Bis(aminocyclohexyl)methan (BACM) und Bis(3-methyl-4-aminocyclohexyl)methan (BMACM) genannt.

Als Beispiele für Copolyamide seien Copolymere von Caprolactam und Lauryllactam (PA-6/12), Copo-lymere von Caprolactam, Adipinsäure und Hexamethylendiamin (PA-6/6,6), Copolymere von Caprolactam, Lauryllactam, Adipinsäure und Hexamethylendiamin (PA-6/12/6,6), Copolymere von Caprolactam, Lauryllac-tam, 11-Aminoundecansäure, Azelainsäure und Hexamethylendiamin (PA-6/6,9/11/12), Copolymere von Cap-rolactam, Lauryllactam, 11-Aminoundecansäure, Adipinsäure und Hexamethylendiamin (PA-6/6,6/11/12) und Copolymere von Lauryllactam, Azelainsäure und Hexamethylendiamin (PA-6,9/12) genannt.

Copolymere auf der Basis von Polyolefinen und Polyamiden mit einer guten Sperrwirkung gegenüber Styrol sind z.B. in der EP 1 460 109 beschreiben, auf die hier wegen näherer Einzelheiten auch verwiesen wird.

Eine weitere Gruppe von Mehrschichtfolien mit einer guten Sperrwirkung gegenüber Styrol sind Copolymere aus Ethylen und Vinylmonomeren wie Vinylalkohol (sog. EVOH Copolymere) oder Vinylacetat (sog. EVA-Copolymere).

Schließlich seien an dieser Stelle noch erwähnt Copolymere auf der Basis von Olefinen und Acrylsäureestern.

Neben der Sperrwirkung wie vorstehend beschreiben im eingebauten Auskleidungsschlauch ist eine Barrierewirkung gegenüber Styrol insbesondere auch bei der UV-Härtung von Vorteil. Bei dieser entstehen im zu sanierenden Leitungssystem lokal und zeitlich begrenzt hohe Temperaturen, bei denen Styrol mit Luft zündfähige Gemische bilden könnte, was aus Sicherheitsgründen vermieden werden sollte

Unter nahtlosem Innenfolienschlauch im Sinne der vorliegenden Erfindung ist ein Folienschlauch zu verstehen, der nicht aus Faserbändern durch Umlegen, Verkleben, Verschweißen oder Wickeln hergestellt wird. Alle diese Herstellungsverfahren führen an der Stelle, an der sich Folienbänder überlappen oder durch Umlegen Randbereiche aufeinander zu liegen kommen, die verbunden werden, zu Nahtstellen bzw. Nahtlinien und damit zu erhöhten Durchflusswiderständen oder einem erhöhten Keimbildungsrisiko.

Nahtlose Folien zur Verwendung in Auskleidungsschläuchen gemäß der vorliegenden Erfindung können beispielsweise durch Extrusion oder Spritzgussverfahren mit ringförmigen Düsen erhalten werden. Mono- oder Co-Extrusion (gleichzeitige Extrusion mehrerer Schichten in einer Folie) von nahtlosen Schläuchen können an dieser Stelle beispielhaft erwähnt werden. Die Co-Extrusion eignet sich daher besonders für die Herstellung von Mehrschichtverbundfolien, die erfindungsgemäß bevorzugt als Innenfolienschläuche Einsatz finden. Selbstverständlich sind dem Fachmann jedoch auch weitere Herstellverfahren nahtloser Schläuche im Allgemeinen bekannt, die sich für die Herstellung eines nahtlosen Innenfolienschlauchs eignen.

Bevorzugte Verfahren zur Herstellung nahtloser Folienschläuche sind das Extrusionsblasen oder das Extrusionsblasformen, welche dem Fachmann bekannte Verfahren sind, so dass sich hier nähere Angaben erübrigen.

Da bei der Verwendung von nahtlosen Innenfolien eine Verklebung oder Verschweißung von Längskanten nicht erforderlich ist, kann eine Verstärkung oder Armierung flächendeckend aufgebracht werden, so dass ein homogenes Produkt gleichmäßiger Dicke und Festigkeit erhalten werden kann, welches auch gleichmäßig und vollflächig an das Faserband oder die Faserbänder anbinden kann. Bei den Produkten aus dem Stand der Technik, kann wegen der Notwendigkeit die Folien im Verschweißungs- oder Verklebungsbereich frei von einer Verstärkung oder Armierung zu halten, eine solche gleichmäßige und flächendeckende Anbindung nicht oder nur schwer erhalten werden.

Die nahtlose schlauchförmige Innenfolie weist auf der im eingebauten Zustand dem bzw. den harzgetränkten Faserband bzw. Faserbändern zugewandten Oberfläche funktionelle Gruppen und/oder eine Verstärkung oder Armierung auf.

Struktur und Aufbau der Innenfolie unterliegen keinen besonderen Beschränkungen hinsichtlich der Monomerauswahl. Wird ein durch Bestrahlung härtbares Harz im Faserschlauch eingesetzt, werden vorzugsweise Innenfolien verwendet, die für das zur Bestrahlung verwandte Licht eine hohe Durchlässigkeit aufweisen. Da zur Bestrahlung in der Regel UV-Licht mit Wellenlängen im Bereich von 300 bis 500 nm, vorzugsweise im Bereich von 350 bis 450 nm verwendet wird, sollte der Innenfolienschlauch in diesen Wellenlängenbereichen eine möglichst niedrige Extinktion bzw. Absorption aufweisen.

Die Art der Einbringung der funktionellen Gruppen unterliegt an sich keiner Beschränkung und es können grundsätzlich alle Verfahren angewandt werden, die dem Fachmann bekannt und in der Literatur für entsprechende Modifizierungen von Folien beschrieben sind.

Die funktionellen Gruppen sollen bei der Aushärtung der erfindungsgemäßen Auskleidungsschläuche eine Anbindung des Innenfolienschlauchs an das harzgetränkte Faserband bzw. die harzgetränkten Faserbänder bewirken. Daher sollten die funktionellen Gruppen an der Oberfläche solange vorhanden sein, als dies zur Reaktion mit dem Faserschlauch und vorzugsweise mit dem Fasermaterial oder insbesondere mit dem härtbaren Harz erforderlich ist. Soweit die Reaktion erst bei der Aushärtung stattfindet (was sich in einigen Fällen als vorteilhaft herausgestellt hat), erfordert dies eine entsprechende Stabilität der funktionellen Gruppen, da die erfindungsgemäßen Auskleidungsschläuche in der Regel vorkonfektioniert werden und zwischen Produktion und Aushärtung im zu sanierenden System mehrere Wochen oder sogar Monate liegen können. Eine Reaktion erst bei der Aushärtung bewirkt den Vorteil, dass beim Einbau und dem Inanlagebringen des Auskleidungschlauchs an die Wandung des zu sanierenden Systems keine oder nur geringe Wechselwirkungen zwischen dem Innenfolienschlauch und dem Faserschlauch zu erwarten sind, die sich nachteilig auswirken und beispielsweise zur Faltenbildung oder vergleichbaren Problemen führen können.

Geeignete funktionelle Gruppen sind beispielsweise Carbonsäure-, Carbonsäureanhydrid-, Carbonsäureeester-, Carbonsäureamid-, Carbonsäureimid-, Amino-, Hydroxyl-, Epoxid-, Urethan- und Oxazolingruppen, um nur einige bevorzugte Vertreter zu nennen. Besonders bevorzugt sind Carbonsäure-, Carbonsäureanhydrid- oder Epoxidgruppen.

Diese können durch Copolymerisation entsprechender Monomerer mit anderen Monomeren aus denen die den Innenfolienschlauch bildenden Polymere hergestellt werden oder aber durch gemeinsame Verwendung von Polymeren ohne funktionelle Gruppen mit Polymeren mit funktionellen Gruppen, vorzugsweise über die Schmelze oder durch Coextrusion erhalten werden.

Damit eine Reaktion zwischen den funktionellen Gruppen der Innenfolie und dem Harz stattfindet, müssen die funktionellen Gruppen auf der Oberfläche der Innenfolie erreichbar sein, die im eingebauten Zustand dem harzgetränkten Faserschlauch zugewandt ist, d.h. auf dieser Oberfläche vorhanden sein. Verbundfolien aus Polyolefinen und Polyamiden, bei denen die dem Faserschlauch zugewandte Seite keine funktionellen (Carbonsäureamid) Gruppen aufweist und wie sie in der Literatur in entsprechenden photochemisch härtbaren Systemen bereits zur Verwendung als Innenfolie beschrieben wurden, erfüllen diese Voraussetzungen in der Regel nicht.

Geeignete reaktive Monomere zur Einführung von geeigneten funktionellen Gruppen sind beispielsweise Maleinsäure, Maleinsäureanhydrid, Itaconsäure, (Meth)Acrylsäure, Glycidyl(meth)acrylat und Vinylester, insbesondere Vinylacetat, Vinylphosphonsäure und deren Ester, sowie Ethylenoxid und Acrylnitril, um nur einige bevorzugte Vertreter zu nennen.

Der Anteil der Comonomeren zur Einführung der funktionellen Gruppen liegt im allgemeinen im Bereich von 0,1 bis 50, vorzugsweise von 0,3 bis 30 und besonders bevorzugt von 0,5 bis 25 Gew.%, bezogen auf das Gesamtgewicht der Monomermischung.

Diese Monomere können nach an sich bekannten und in der Literatur beschriebenen Verfahren, z.B. in der Schmelze oder in Lösung mit den restlichen Monomeren copolymerisiert oder mit Polymeren oder Monomeren ohne funktionelle Gruppen umgesetzt z.B. aufgepfropft werden.

Bei der Pfropfung werden die entsprechenden Monomere mit einem bereits gebildeten Polymergrundgerüst zur Umsetzung gebracht. Entsprechende Verfahren sind dem Fachmann bekannt und in der Literatur beschrieben, so dass sich hier nähere Details erübrigen.

Nachfolgend sollen einige bevorzugte Gruppen von Polymeren etwas ausführlicher beschrieben werden, wobei der Erfindung aber nicht auf diese Gruppen von Polymeren beschränkt ist.

Eine erste Gruppe bevorzugter Polymerer sind beispielsweise Homo- oder Copolymere von Olefinen, insbesondere von α-Olefinen mit vorzugsweise 2 bis 8, insbesondere 2-6 C-Atomen. Besonders bevorzugte Monomere sind Ethen, Propen und Octen, wobei letzteres sich auch gut mit Ethen copolymerisieren läßt.

Als Comonomere für die erwähnten Olefine kommen insbesondere Alkylacrylate oder Alkylmethacrylate, die sich von Alkoholen mit 1 bis 8 C-Atomen ableiten, z.B. Ethanol, Butanol oder Ethylhexanol, um nur einige bevorzugte Beispiele zu nennen, in Betracht. Mit diesen können dann entsprechende reaktive Comonomere zur Einführung der vorstehend erwähnten funktionellen Gruppen copolymerisiert werden.

Eine erste bevorzugte Gruppe von derartigen Polymeren mit funktionellen Gruppen sind Copolymere des Ethens mit Ethyl- oder Butylacrylat und Acryläure und/oder Maleinsäureanhydrid. Entsprechende Produkte sind beispielsweise von BASF SE unter der Handelsbezeichnung Lupolen® KR 1270 erhältlich.

Auch Ethen/Propen-Copolymere mit geeigneten Comonomeren zur Einbringung der entsprechenden funktionellen Gruppen sind geeignet.

Weiter können erwähnt werden Ethen/Octen-Copolymere, die mit entsprechenden Monomeren zur Einführung funktioneller Gruppen gepfropft sind. Beispielhaft sei hier Fusabond® NM493 D der Fa. DuPont erwähnt.

In manchen Fällen haben sich sogenannte funktionalisierte EPDM-Kautschuke als vorteilhaft erwiesen, die wegen ihrer elastischen Eigenschaften Vorteile bei dem Inanlagebringen des Auskleidungsschlauchs mit sich bringen können. Beispielhaft seien hier Terpolymerisate aus in der Regel mindestens 30 Gew.% Ethen, mindestens 30 Gew.% Propen und einer bis zu 15 Gew.% Dienkomponente (in der Regel Diolefine mit mindestens 5 C-Atomen wie Dicyclopentadien, 1,4-Hexadien oder 5-Ethylidennorbornen) genannt. Hier sei als kommerzielles Produkt Royaltuf® 485 der Fa. Crompton genannt.

Geeignete Polymere sind weiterhin solche aus vinylaromatischen Monomeren und Dienen, beispielsweise Styrol und Dienen, wobei die Diene ganz oder teilweise hydriert sein können, die entsprechende funktionelle Gruppen aufweisen. Solche Copolymere können statistisch aufgebaut sein oder eine Blockstruktur aufweisen, wobei auch Mischformen möglich sind (sog. tapered-Strukturen). Entsprechende Produkte sind in der Literatur beschrieben und kommerziell von verschiedenen Anbietern erhältlich. Als Beispiele seien die kommerziellen Produktreihen Styrolux® und Styroflex® der BASF SE oder speziell als mit Anhydridgruppen funktionalisiertes Styrol/Ethen/Buten-Copolymer Kraton® G 1901 FX der Fa. Shell genannt.

Die Polymere der Innenfolie können die funktionellen Gruppen auch latent enthalten, d.h. in einer Form, bei der die eigentliche funktionelle Gruppe erst bei der Härtung freigesetzt wird.

Weiterhin ist es möglich, Mischungen von Polymeren zu verwenden, wobei nur eines der Polymere die funktionellen Gruppen oder latente funktionelle Gruppen der zuvor genannten Art aufweist.

Als geeignete Polymere mit funktionellen Gruppen bei dieser Variante eignen sich beispielsweise Polyamide, Polyoxymethylen, AcrylnitrilButadien- Styrol- Copolymere (ABS), Polymethylmethacrylat, Polyvinylacetat und Polyvinylalkohol.

Wesentlich ist dabei, dass das polare Polymere mit dem Polymer ohne funktionelle Gruppen gut mischbar ist. Das Vermischen kann vorteilhaft in der Schmelze erfolgen. Die Menge an zugemischtem Polymer mit funktionellen Gruppen liegt in der Regel im Bereich von 0,01 bis 50 Gew.%, bezogen auf die Mischung.

Grundsätzlich eignen sich unter Berücksichtigung dieser Kriterien Polyolefine wie Polyethylen oder Polypropylen, Polyamide, Polyester wie Polybutylenterephthalat, Polyethylenterephthalat oder Polyethylennaphthalat, Polyvinylchlorid, Polyacrylnitril oder auch thermoplastische Polyurethane oder Mischungen dieser Polymeren. Auch thermoplastische Elastomere sind grundsätzlich geeignet. Thermoplastische Elastomere sind Werkstoffe, bei denen elastische Polymerketten in thermoplastisches Material eingebunden sind. Trotz des Fehlens einer bei den klassischen Elastomeren erforderlichen Vulkanisation weisen thermoplastische Elastomere gummielastische Eigenschaften auf, was bei manchen Anwendungen vorteilhaft sein kann. Beispielhaft seien hier Polyolefin-Elastomere oder Polyamid-Elastomere genannt. Entsprechende Produkte sind in der Literatur beschrieben und von verschiedenen Herstellern kommerziell erhältlich, so dass sich hier detaillierte Angaben erübrigen.

Statt durch Copolymerisation oder durch Mischen oder Pfropfen können die funktionellen Gruppen in die Innenfolie auch mit Hilfe geeigneter Haftvermittler eingeführt werden, die auf die Oberfläche der Folien aufgebracht werden. Geeignete Haftvermittler bei dieser Ausführungsform sind z.B. Silane, Lösungen oder Schmelzen von polaren oder funktionalisierten Polymeren, sowie geeignete Klebstoffe und Haftvermittlerfolien. Diese werden vorzugsweise gleichmäßig deckend auf die Folie, die den Innenfolienschlauch bildet, aufgebracht um eine möglichst gleichmäßige Verteilung der funktionellen Gruppen zu erhalten.

Schließlich können die vorstehend genannten funktionellen Gruppen auch durch Oberflächenbehandlung der den inneren Folienschlauch bildenden Folien mit Hilfe von reaktiven Gasen wie Sauerstoff, Fluor oder Chlor erhalten werden. Durch die Einwirkung dieser Medien entstehen an der Oberfläche sauerstoffhaltige funktionelle Gruppen der eingangs genannten bevorzugten Art wie Säure- Säureanhydrid oder Epoxidgruppen. Es sei allerdings an dieser Stelle erwähnt, dass die Verteilung der funktionellen Gruppen an der Oberfläche nur schwer zu steuern ist, so dass eine höhere Wahrscheinlichkeit einer inhomogenen Verteilung besteht als nach den zuvor beschriebenen Verfahren der Co- oder Pfopfpolymerisation oder der Verwendung von Haftvermittlern. Auch können Art und Menge der funktionellen Gruppen stärkeren Schwankungen bei dieser Variante unterliegen.

Gemäß einer weiteren bevorzugten Ausführungsform kann die schlauchförmige Innenfolie auf der im eingebauten Zustand dem bzw. den harzgetränkten Faserband bzw. Faserbändern zugewandten Oberfläche eine Verstärkung oder Armierung aufweisen. Diese Verstärkung oder Armierung kann die funktionellen Gruppen gemäß der vorstehend beschriebenen Ausführungsform ganz oder teilweise ersetzen und führt wie die zuvor beschriebene Ausführungsform mit funktionellen Gruppen zu einer Anbindung des Innenfolienschlauchs an das Faserband.

Die Armierung gemäß dieser Ausführungsform kann mit Harz getränkt werden, wobei vorzugsweise das gleiche Harz Verwendung finden kann, welches auch für die Tränkung des oder der Faserbänder verwendet wird. Die Harztränkung der Verstärkung kann die Anbindung an die harzgetränkten Faserbänder verbessern.

Als Verstärkung oder Armierung eignen sich dabei grundsätzlich alle dem Fachmann bekannten Produkte insbesondere in Form von Geweben, Gewirken, Gelegen, Matten oder Vliesen, die z.B. Fasern in Form von langen Endlosfasern oder kurzen Fasern enthalten können. Entsprechende Produkte sind dem Fachmann an sich bekannt und in großer Vielfalt von verschiedenen Herstellern kommerziell erhältlich.

Unter Geweben werden dabei im allgemeinen flächenförmige Textilerzeugnisse aus mindestens zwei rechtwinklig gekreuzten Fasersystemen verstanden, wobei die so genannte Kette in Längsrichtung und der so genannte Schuss senkrecht dazu verlaufen.

Unter Gewirken werden im allgemeinen Textilerzeugnisse verstanden, die durch Maschenbildung erzeugt werden.

Fasergelege sind eine Verarbeitungsvariante von Fasern, bei denen die Fasern nicht verwoben werden, sondern parallel oder unter einem Winkel zueinander ausgerichtet und ggf. mittels eines Steppfadens oder eines Klebstoffes fixiert werden. Fasergelege, insbesondere Fasergelege mit paralleler Faserausrichtung, können durch die Ausrichtung der Fasern eine ausgeprägte Anisotropie der Festigkeiten in Orientierungsrichtung und senkrecht dazu aufweisen, was für manche Anwendungen von Interesse sein kann.

Ein Vlies besteht aus lose zusammen liegenden Fasern, welche noch nicht miteinander verbunden sind. Die Festigkeit eines Vlieses beruht nur auf der fasereigenen Haftung, kann aber durch Aufarbeitung beeinflusst werden. Damit man das Vlies verarbeiten und benutzen kann, wird es in der Regel verfestigt, wofür verschiedene Methoden angewandt werden können.

Vliese sind verschieden von Geweben oder Gewirken, die sich durch vom Herstellverfahren bestimmte Legung der einzelnen Fasern oder Fäden auszeichnen. Vliese bestehen dagegen aus Fasern, deren Lage sich nur mit den Methoden der Statistik beschreiben lässt. Die Fasern liegen wirr im Vliesstoff zueinander. Die englische Bezeichnung non-woven (nicht gewebt) grenzt sie dementsprechend eindeutig von Geweben ab. Vliesstoffe werden unter anderem nach dem Fasermaterial (z. B. das Polymer bei Chemiefasern), dem Bindungsverfahren, der Faserart (Stapel- oder Endlosfasern), der Faserfeinheit und der Faserorientierung unterschieden. Die Fasern können dabei definiert in einer Vorzugsrichtung abgelegt werden oder gänzlich stochastisch orientiert sein wie beim Wirrlagen-Vliesstoff.

Wenn die Fasern keine Vorzugsrichtung in ihrer Ausrichtung (Orientierung) haben, spricht man von einem isotropen Vlies. Sind die Fasern in einer Richtung häufiger angeordnet als in der anderen Richtung, dann spricht man von Anisotropie.

Auch Filze sind als Armierung für die beidseitig armierte Folie einsetzbar. Ein Filz ist ein Flächengebilde aus einem ungeordneten, nur schwer zu trennendem Fasergut. Prinzipiell sind Filze damit nicht gewebte Textilien. Aus Chemiefasern und Pflanzenfasern werden Filze in der Regel durch trockene Vernadelung (sog. Nadelfilze) oder durch Verfestigung mit unter hohem Druck aus einem Düsenbalken austretenden Wasserstrahlen hergestellt. Die einzelnen Fasern im Filz sind ungeordnet miteinander verschlungen.

Nadelfilz wird mechanisch in der Regel mit zahlreichen Nadeln mit Widerhaken hergestellt, wobei die Widerhaken umgekehrt wie bei einer Harpune angeordnet sind. Dadurch werden die Fasern in den Filz gedrückt und die Nadel geht leicht wieder heraus. Durch wiederholtes Einstechen werden die Fasern miteinander verschlungen und anschließend eventuell chemisch oder mit Wasserdampf nachbehandelt.

Filze lassen sich - wie Vliese - aus praktisch allen natürlichen oder synthetischen Fasern herstellen. Neben der Vernadelung oder in Ergänzung ist auch das Verhaken der Fasern mit einem gepulsten Wasserstrahl oder mit einem Bindemittel möglich. Die letztgenannten Verfahren eignen sich insbesondere für Fasern ohne Schuppenstruktur wie Polyester- oder Polyamidfasern.

Filze weisen eine gute Temperaturbeständigkeit auf und sind in der Regel feuchtigkeitsabweisend, was bei der Anwendung in flüssigkeitsführenden Systemen von Vorteil sein kann.

Die Länge der in faserhaltigen Armierungsmitteln verwendeten Fasern unterliegt an sich keiner besonderen Beschränkung, d.h. es können sowohl so genannte Langfasern als auch Kurzfasern oder Faserbruchstücke verwendet werden. Über die Länge der verwendeten Fasern lassen sich die Eigenschaften der entsprechenden Faserbänder auch über weite Bereiche einstellen und steuern.

Auch die Art der verwendeten Fasern unterliegt keiner Beschränkung. Nur beispielhaft seien hier Glasfasern, Carbonfasern oder Kunststofffasern wie Aramidfasern oder Fasern aus thermoplastischen Kunststoffen wie Polyestern oder Polyamiden oder Polyolefinen (z.B. Polypropylen) genannt, die dem Fachmann mit ihren Eigenschaften bekannt und in großer Vielzahl kommerziell erhältlich sind. Aus wirtschaftlichen Gründen werden in der Regel Glasfasern bevorzugt; werden Fasern auf Basis anderer Materialien eingesetzt, kann es vorteilhaft sein, Aramidfasern oder Carbonfasern zu verwenden, die hinsichtlich der Festigkeit bei höheren Temperaturen Vorteile gegenüber Fasern auf der Basis von thermoplastischen Kunststoffen bieten können.

Die Verbindung der Armierung mit der Folie kann auf an sich bekannte Weise beispielsweise thermisch durch Verschweißen oder kaschieren oder mit Hilfe geeigneter Kleber erfolgen. Wesentlich ist, dass die Armierung mit der Folie eine ausreichend stabile Verbindung aufweist um eine Trennung oder Delaminierung während der Herstellung des Auskleidungsschlauchs zu vermeiden.

Durch Co-Extrusion oder Pultrusion können direkt verstärkte und mehrschichtige Verbundfolien in Schlauchform hergestellt werden, die eine Verstärkung oder Armierung in der erfindungsgemäß geforderten Gestaltung aufweisen.

Die Tränkung des harzgetränkten Faserbandes oder der harzgetränkten Faserbänder, die mit der schlauchförmigen Innenfolie in Kontakt stehen, mit Harz erfolgt in an sich bekannter Weise. Entsprechende Verfahren sind dem Fachmann bekannt und in der Literatur beschrieben, weshalb sich hier detaillierte Ausführungen erübrigen.

Der Fachmann wird das zur Tränkung verwendete Harz abhängig von der Art seiner Faserverstärkung und der erforderlichen Eigenschaften im individuellen Anwendungsfall auswählen. Harze zur Tränkung von Fasersystemen sind in einer großen Zahl in der Literatur beschrieben und dem Fachmann an sich bekannt.

Harze, die photochemisch gehärtet werden können, haben sich in einer Reihe von Anwendungsfällen als vorteilhaft erwiesen.

Gemäß einer Ausführungsform der vorliegenden Erfindung kann vorgesehen sein, dass das mindestens eine härtbare Harz ein ungesättigtes Polyesterharz, ein Vinylesterharz oder ein Epoxidharz ist, wobei das mindestens eine härtbare Harz photochemisch härtbar ist und einen Photoinitiator enthält.

Durch einen Einsatz eines photochemisch härtbaren Harzes umfassend einen Photoinitator ist eine Aushärtung des Harzes mit elektromagnetischer Strahlung, insbesondere mit UV-Licht möglich. Dies ermöglicht nach dem Einbringen des Auskleidungsschlauches in eine zu sanierende Rohrleitung ein besonders schnelles und effizientes Aushärten unter minimalem Energieeinsatz. Solche Reaktionsharze für eine Aushärtung mit UV-Licht mit Photoinitiatoren sind beispielsweise in der EP-A 23634 beschrieben. Da zur Bestrahlung in der Regel UV-Licht mit Wellenlängen im Bereich von 300 bis 500 nm, vorzugsweise im Bereich von 350 bis 450 nm verwendet wird, sollte der Innenfolienschlauch in diesen Wellenlängenbereichen keine oder nur eine geringe Extinktion bzw. Absorption aufweisen.

Charakterisiert wird die Extinktion bzw. Absorption von Folien in der Regel über die Transparenz d.h. die Fähigkeit der untersuchten Folie, elektromagnetische Wellen der untersuchten Wellenlängen durchzulassen (Transmission). Einfallende Photonen wechselwirken je nach Energie mit unterschiedlichen Bestandteilen des Materials, somit ist die Transparenz eines Materials abhängig von der Frequenz der elektromagnetischen Welle.

Neben dem effizienten Aushärten durch UV-Licht ist ein Einsatz von UV-Licht auch vorteilhaft um möglicherweise vorhandene Keime abzutöten und den Auskleidungsschlauch zu sterilisieren.

Dabei hat es sich gemäß einer Ausführungsform der vorliegenden Erfindung als besonders vorteilhaft erwiesen, dass das Epoxidharz ein durch photochemisch initiierte kationische Polymerisation härtbares Epoxidharz ist.

Neben photochemisch härtbaren Harzen eignen sich im Rahmen der vorliegenden Erfindung auch thermisch härtbare Harze, die durch Temperaturerhöhung (z.B. Dampfhärtung oder dgl.) ausgehärtet werden. Bei Verwendung solcher Harze ist ein gutes Temperaturmanagement vor dem Einbau der Auskleidungsschläuche erforderlich, um eine vorzeitige Aushärtung zu vermeiden. Der Auskleidungsschlauch muss bis zur Aushärtung bei Temperaturen gelagert und verarbeitet werden, die unter der zur Härtung erforderlichen Temperatur liegt. Dies kann je nach äußeren Bedingungen jahreszeitabhängig eine Kühlung der Auskleidungsschläuche zwischen Herstellung und Einbau erforderlich machen.

Gemäß einer bevorzugten Ausführungsform kann vorgesehen sein, dass der Auskleidungsschlauch weiter mindestens eine äußere Folie aufweist, die auf der der Innenfolie abgewandten Oberfläche der harzgetränkten Faserbänder angeordnet ist.

Für diese Außenfolie können grundsätzlich die gleichen Polymeren verwendet werden, wie sie vorstehend für die Innenfolie beschrieben wurden. Auch die Außenfolie kann zur Verbesserung der Anbindung an das harzgetränkte Faserband bzw. die harzgetränkten Faserbänder an der diesen zugewandten Oberfläche funktionelle Gruppen oder eine Verstärkung oder Armierung aufweisen. Auch hier gilt bezüglich der funktionellen Gruppen und der Verstärkung oder Armierung das vorstehend für den nahtlosen Innenfolienschlauch Gesagte.

Da der äußere Folienschlauch nicht mit dem im Leitungssystem transportierten Medium in Kontakt steht, kann der äußere Folienschlauch auch eine Naht aufweisen. Dies ermöglicht z.B. die Herstellung des Außenfolienschlauchs durch Wickeln oder Zusammenführen der Längskanten von Flachfolien, was die technische Herstellung und Einbringung in den Auskleidungsschlauch gemäß der vorliegenden Erfindung erleichtert. Es ist aber ebenso möglich, auch für den äußeren Folienschlauch eine nahtlose Schlauchfolie zu verwenden, die dann beispielsweise über den zuvor hergestellten Auskleidungsschlauch aus Innenfolienschlauch und harzgetränkten Faserbändern übergezogen wird.

Im Allgemeinen ist jedoch die Verwendung gewickelter äußerer Folienschläuche oder von Folienschläuchen, die durch Verklebung oder Verschweißung aus Flachfolien erhalten werden, bevorzugt.

Gemäß einer weiteren Ausführungsform der Erfindung kann vorgesehen sein, dass im Auskleidungsschlauch zwischen dem vorstehend beschriebenen Innenfolienschlauch und dem Faserband bzw. den Faserbändern ein weiterer Folienschlauch enthalten ist, der beidseitig eine Armierung aufweist. In dieser Ausführungsform steht der nahtlose Innenfolienschlauch mit dem Faserband bzw. den Faserbändern nicht mehr in unmittelbarem Kontakt, sondern der Kontakt wird mittelbar erreicht. Durch die beidseitige Armierung wird eine Anbindung des zweiten inneren Folienschlauchs sowohl an das harzgetränkte Faserband bzw. die harzgetränkten Faserbänder einerseits als auch an den vorstehend beschriebenen Innenfolienschlauch erreicht (dies führt zu dem mittelbaren Kontakt im Sinne der vorliegenden Erfindung).

Das Kunststoffmaterial für die Folien dieses optional vorhandenen beidseitig armierten Folienschlauchs unterliegt keiner grundsätzlichen Beschränkung und der Fachmann wird nach dem angestrebten Anwendungszweck ein geeignetes Folienmaterial auswählen. Vorteilhaft ist, wenn der Folienschlauch eine Sperrwirkung gegen in den harzgetränkten Faserbändern, die mit der beidseitig armierten Folie in Kontakt stehen, vorhandenem Harz bzw. Harzkomponenten (z.B. Lösungsmittel) aufweist. Geeignete Folienmaterialien sind dem Fachmann an sich bekannt und in der Literatur beschrieben. Nur stellvertretend seien hier Polyolefinfolien oder Verbundfolien aus Polyolefinen und Polyamiden genannt, die eine gute Sperrwirkung gegen das häufig als Lösungsmittel in den zur Tränkung verwendeten Harzen enthaltene Styrol aufweisen.

Besonders bevorzugt handelt es sich bei der Armierung der beidseitig armierten Folie um eine Vlieskaschierung.

Dabei soll im Folgenden unter Vliesschicht auch eine Anordnung von mehr als einem Vlies verstanden werden, d.h. jede der Vliesschichten kann aus einer Kombination von mehreren Vliesen bestehen. Bevorzugt ist allerdings ein Vlies pro Vliesschicht.

Die beidseitig armierte Folie bzw. deren Armierung kann, muss aber nicht zwingend, mit Harz getränkt sein.

Grundsätzlich ist es vorteilhaft, die auf der Innenseite des Auskleidungsschlauchs angeordneten Elemente des Auskleidungsschlauchs so auszuwählen, dass diese eine möglichst hohe Transparenz für die zur Aushärtung verwandten Strahlung aufweisen, falls die Aushärtung durch Bestrahlung erfolgt.

Gemäß einer weiteren Ausführungsform der Erfindung kann vorgesehen sein, dass auf einem ersten Außenfolienschlauch wie vorstehend beschrieben mindestens ein weiterer Außenfolienschlauch angeordnet ist, wobei der weitere Außenfolienschlauch bzw. die weiteren Außenfolienschläuche einseitig oder beidseitig armiert, insbesondere mit einer Vliesschicht kaschiert sein kann bzw. sein können. In diesem Fall wäre der erste Folienschlauch richtigerweise nicht mehr als Außenfolienschlauch zu bezeichnen, sondern als "außen angeordneter" Folienschlauch, wobei außen angeordnet andeutet, dass der Folienschlauch auf der dem strömenden fluiden Medium abgewandten Seite der Faserbänder angeordnet ist.

Weitere Folienschläuche können für die weitere Erhöhung der Dichtigkeit, insbesondere für die Dichtigkeit in den Randbereichen der erfindungsgemäßen Auskleidungsschläuche von Vorteil sein.

Im Falle der Verwendung von ggf. armierten weiteren Folienschläuchen ist in der Regel mindestens eine der Armierungen von zwei miteinander in Berührung stehenden Folienschläuchen mit Harz getränkt. Eine Tränkung einer Armierung bei zwei miteinander in Kontakt stehenden Armierungen ist in der Regel ausreichend, um eine Imprägnierung bzw. Tränkung auch der zweiten Armierungsschicht zu erreichen, was für die Verbindung der Armierungen (und damit der Folienschläuche) von Vorteil ist und auch für die Dichtigkeit nach Aushärtung vorteilhafte Auswirkungen hat.

Als echter Außenfolienschlauch ist richtigerweise nur der Folienschlauch zu bezeichnen, der den äußeren Abschluss des Auskleidungsschlauchs bildet, der den Auskleidungsschlauch von der Umgebung (im Fall von Kanalsystemen in der Regel das Erdreich) trennt.

Die Dicke der verschiedenen Armierungsschichten, vorzugsweise Vliesschichten unterliegt an sich keiner besonderen Beschränkung. In einigen Fällen haben sich Dicken von 10 µm bis 1000 µm, vorzugsweise von 20 bis 500 µm und insbesondere von 25 bis 150 µm, und/oder ein Flächengewicht von 10 bis 300 g/m², vorzugsweise von 15 bis 200 g/m² und insbesondere von 20 bis 80 g/m² als vorteilhaft erwiesen. In manchen Fällen haben sich Dicken im Bereich von 40 bis 90 µm als vorteilhaft erwiesen.

Auf den vorstehend beschriebenen außen angeordneten Folien der erfindungsgemäßen Auskleidungsschläuche wird in der Regel mindestens eine lichtundurchlässige Schutzfolie angeordnet, die auch eine als Diffusionsbarriere ausgebildete Schicht enthalten kann und die den Auskleidungsschlauch beim Transport vor Beschädigungen und vorzeitiger Aushärtung (insbesondere bei der Verwendung photochemisch härtender Harze) schützt. Diese Schicht oder Folie verbleibt nach dem Einbringen des Auskleidungsschlauchs in das zu sanierende Leitungssystem im Leitungssystem, wenn der Auskleidungsschlauch durch Einziehen ohne Inversion (Umstülpen) in das zu sanierende Leitungssystem eingebracht wird. Wenn der Auskleidungsschlauch durch Inversion in das zu sanierende Leitungssystem eingebracht wird, wird diese Schutzfolie im eingebauten Zustand zu einer Innenfolie und wird nach Einbringung in das Leitungssystem und vor der Aushärtung entfernt, da eine Härtung durch Bestrahlung wegen der Undurchlässigkeit dieses Schlauchs für das zur Bestrahlung verwendete Licht nicht möglich ist.

Vorteilhafterweise kann der Auskleidungsschlauch auf der dem fluiden Medium zugewandten Seite der aushärtbaren Lage aus einem oder mehreren Faserbändern mit einer oder mehreren inneren Schutzfolien, insbesondere in Form von Kunststofffolien, versehen sein. Entsprechende Folien sind dem Fachmann an sich bekannt und in der Literatur beschrieben, so dass sich hier nähere Ausführungen erübrigen.

Erfindungsgemäße Auskleidungsschläuche mit einem nahtlosen Innenfolienschlauch weisen nach der Einbringung in das zu sanierende fluidführende Leitungssystem und nachfolgender Aushärtung eine besonders gute Dichtigkeit auf, was insbesondere bei Anwendungen von Vorteil ist, bei denen sich die zu sanierenden Leitungssysteme in geschützten oder zu schützenden Bereichen befinden.

Aufgrund der fehlenden Nahtstellen des erfindungsgemäßen Innenfolienschlauchs sind keine Angriffspunkte zur Ansammlung von Ablagerungen vorhanden, die eine Keimbildung befördern können. Da auch keine Verbindungsstellen im nahtlosen Schlauch vorhanden sind, kann hier kein Dichtigkeitsproblem auftreten.

Abschließend ist es zudem vorteilhaft, dass aufgrund der fehlenden Nahtstellen des Innenfolienschlauchs ein verringerter Durchflusswiderstand erzielt wird. Dies ist bei einer Sanierung von Leitungssystemen vorteilhaft, die kein Totvolumen aufweisen und in denen ein erhöhter Durchflusswiderstand durch zusätzlichen Energieeinsatz überwunden werden muss.

Ein weiterer Vorteil, der sich bei der Verwendung der vorstehend beschriebenen Innenfolienschläuche gemäß der bevorzugten Ausführungsformen mit funktionellen Gruppen oder einer Verstärkung ergibt, ist die Tatsache, dass diese Innenfolienschläuche nach Einbau in das zu sanierende fluidführende und druckbelastete Leitungssystem nicht wieder herausgezogen werden müssen (was erfindungsgemäß bevorzugt ist), da durch die Anbindung an die aushärtbare Lage eine ausreichende Stabilität des Verbunds gegeben ist.

Die vorliegende Erfindung betrifft daher auch ausgehärtete Auskleidungsschläuche mit Innenfolienschläuchen, die an die aushärtbare Lage angebunden bzw. mit dieser verbunden sind.

Schließlich liefert die Erfindung eine Verwendung eines erfindungsgemäßen Auskleidungsschlauchs für die Sanierung fluidführender Leitungssysteme, insbesondere Leitungen für Wasser oder Abwasser oder für die Sanierung von Rohrleitungen in industriellen Produktionsbetrieben.

## Patentansprüche

1. Verwendung mindestens einer nahtlosen schlauchförmigen Innenfolie in einem Auskleidungsschlauch mit mindestens einer unmittelbar oder mittelbar auf der mindestens einen schlauchförmigen Innenfolie aufgebrachten aushärtbaren Lage aus mindestens einem mit härtbaren Harz getränkten Faserband zur Sanierung druckbelasteter Leitungssysteme, die bei einem Druck betrieben werden, der über atmosphärischem Druck liegt, zum Transport fluider Medien, wobei die Innenfolie auf der im eingebauten Zustand dem harzgetränkten Faserband zugewandten Oberfläche funktionelle Gruppen und/oder eine Verstärkung aufweist und wobei die Innenfolie eine Mehrschichtverbundfolie ist, die eine Folienstärke von 100 bis 1000 µm aufweist.

2. Verwendung nach Anspruch 1 für die Sanierung von Druckleitungen für Wasser oder Abwasser oder für die Sanierung von Druckleitungen in industriellen Produktionsbetrieben.

3. Verwendung nach Anspruch 1 oder 2, **dadurch gekennzeichnet, dass** die Mehrschichtverbundfolie eine Barriereschicht aufweist.

4. Verwendung nach einem der Ansprüche 1 bis 3, **dadurch kennzeichnet, dass** die mindestens eine schlauchförmige Innenfolie eine Mehrschichtverbundfolie auf der Basis von Olefinhomo- oder -copolymeren und/oder Polyamiden ist und/oder die Innenfolie eine Folienstärke von 100 bis 500 µm, aufweist.

5. Verwendung nach einem der vorangehenden Ansprüche, **dadurch gekennzeichnet, dass** das härtbare Harz ein ungesättigtes Polyesterharz, ein Vinylesterharz oder ein Epoxidharz ist, wobei das härtbare Harz photochemisch härtbar ist und einen Photoinitiator umfasst.

6. Verwendung nach einem der vorangehenden Ansprüche, **dadurch gekennzeichnet, dass** das Epoxidharz ein durch photochemisch initiierte kationische Polymerisation härtbares Epoxidharz ist.

7. Verwendung nach einem der vorangehenden Ansprüche, **dadurch gekennzeichnet, dass** der Auskleidungsschlauch weiter mindestens eine äußere Folie aufweist, die auf der der Innenfolie abgewandten Seite der Oberfläche der Faserbänder angeordnet ist.

8. Verwendung nach Anspruch 7, **dadurch gekennzeichnet, dass** die mindestens eine äußere Folie mindestens auf der dem harzgetränkten Faserband oder den Faserbändern zugewandten Seite eine Verstärkung und/oder Armierung in Form von Vlies, Filz, Gewebe und/oder Gelege umfasst, insbesondere eine Vlieskaschierung.

9. Verwendung nach einem der vorangehenden Ansprüche, **dadurch gekennzeichnet, dass** die schlauchförmige Innenfolie auf der im eingebauten Zustand dem Faserband bzw. den Faserbändern zugewandten Oberfläche eine Verstärkung oder Armierung aufweist.

10. Verwendung nach einem der vorangehenden Ansprüche, **dadurch gekennzeichnet, dass** die schlauchförmige Innenfolie auf der im eingebauten Zustand dem Faserband bzw. den Faserbändern zugewandten Oberfläche funktionelle Gruppen aufweist.

11. Verwendung nach einem der vorangehenden Ansprüche, **dadurch gekennzeichnet, dass** die schlauchförmige Innenfolie eine antibakterielle Ausrüstung aufweist.

12. Auskleidungsschlauch zur Sanierung druckbelasteter Leitungssysteme, die bei einem Druck betrieben werden, der über atmosphärischem Druck liegt, mit mindestens einer nahtlosen schlauchförmigen Innenfolie und mindestens einer unmittelbar oder mittelbar auf der mindestens einen schlauchförmigen Innenfolie aufgebrachten aushärtbaren Lage aus mindestens einem mit härtbaren Harz getränkten Faserband, **dadurch gekennzeichnet, dass** die Innenfolie auf der im eingebauten Zustand dem harzgetränkten Faserband zugewandten Oberfläche funktionelle Gruppen und/oder eine Verstärkung aufweist und wobei die Innenfolie eine Mehrschichtverbundfolie ist, die eine Folienstärke von 100 bis 1000 µm aufweist.

## Claims

1. Use of at least one seamless sleeve-shaped internal film in a lining sleeve with, applied directly or indirectly on the at least one sleeve-shaped internal film, at least one hardenable ply made of at least one fibre band saturated with curable resin for the renovation of pressurised line systems operated at a pressure that is above atmospheric pressure for the transport of fluids, where the internal film has, on the surface that, in the installed condition, faces towards the resin-saturated fibre band, functional groups and/or a reinforcement, and where the internal film is a multilayer composite film with film thickness of 100 to 1000 µm.

2. Use according to Claim 1 for the renovation of pressure lines for water or wastewater or for the renovation of pressure lines in industrial production operations.

3. Use according to Claim 1 or 2, **characterized in that** the multilayer composite film has a barrier layer.

4. Use according to any of Claims 1 to 3, **characterized in that** the at least one sleeve-shaped internal film is a multilayer composite film based on olefin homo- or copolymers and/or on polyamides, and/or the film thickness of the internal film is 100 to 500 µm.

5. Use according to any of the preceding claims, **characterized in that** the curable resin is an unsaturated polyester resin, a vinyl ester resin or an epoxy resin, where the hardenable resin is photochemically hardenable and comprises a photo initiator.

6. Use according to any of the preceding claims, **characterized in that** the epoxy resin is an epoxy resin that is hardenable via photochemically initiated cationic polymerisation.

7. Use according to any of the preceding claims, **characterized in that** the lining sleeve further has at least one exterior film arranged on that side of the surface of the fibre bands that faces away from the internal film.

8. Use according to Claim 7, **characterized in that** the at least one exterior film comprises, at least on the side that faces towards the resin-saturated fibre band or towards the fibre bands, a reinforcement in the form of non-woven, felt, woven fabric and/or laid scrim, in particular a laminated non-woven.

9. Use according to any of the preceding claims, **characterized in that** the sleeve-shaped internal film has a reinforcement on the surface that, in the installed condition, faces towards the fibre band(s).

10. Use according to any of the preceding claims, **characterized in that** the tube-shaped internal film has functional groups on the surface that, in the installed condition, faces towards the fibre band (s) .

11. Use according to any of the preceding claims, **characterized in that** antibacterial properties have been provided to the sleeve-shaped internal film.

12. Lining sleeve for the renovation of pressurised line systems operated at a pressure that is above atmospheric pressure, with at least one seamless sleeve-shaped internal film and, applied directly or indirectly on the at least one sleeve-shaped internal film, at least one hardenable ply made of at least one fibre band saturated with curable resin, **characterized in that** the internal film has, on the surface that, in the installed condition, faces towards the resin-saturated fibre band, functional groups and/or a reinforcement, and where the internal film is a multilayer composite film with film thickness of 100 to 1000 µm.

## Revendications

1. Utilisation d'au moins un film intérieur en forme de tuyau sans soudure dans un tuyau de chemisage comprenant au moins une couche durcissable d'au moins une bande fibreuse imprégnée avec une résine durcissable appliquée directement ou indirectement sur ledit au moins un film intérieur en forme de tuyau pour la rénovation de systèmes de conduction chargés en pression, qui sont exploités à une pression qui se situe au-dessus de la pression atmosphérique, pour le transport de milieux fluides, le film intérieur comprenant des groupes fonctionnels et/ou un renforcement sur la surface tournée vers la bande fibreuse imprégnée de résine à l'état monté, et le film intérieur étant un film composite multicouche, qui présente une épaisseur de film de 100 à 1 000 µm.

2. Utilisation selon la revendication 1 pour la rénovation de conduites sous pression pour de l'eau ou de l'eau usée ou pour la rénovation de conduites sous pression dans des unités de production industrielles.

3. Utilisation selon la revendication 1 ou 2, **caractérisée en ce que** le film composite multicouche comprend une couche de barrière.

4. Utilisation selon l'une quelconque des revendications 1 à 3, **caractérisée en ce que** ledit au moins un film intérieur en forme de tuyau est un film composite multicouche à base d'homo- ou de copolymères oléfiniques et/ou de polyamides, et/ou le film intérieur présente une épaisseur de film de 100 à 500 µm.

5. Utilisation selon l'une quelconque des revendications précédentes, **caractérisée en ce que** la résine durcissable est une résine de polyester insaturée, une résine d'ester de vinyle ou une résine d'époxyde, la résine durcissable étant durcissable photochimiquement et comprenant un photoinitiateur.

6. Utilisation selon l'une quelconque des revendications précédentes, **caractérisée en ce que** la résine d'époxyde est une résine d'époxyde durcissable par polymérisation cationique initiée photochimiquement.

7. Utilisation selon l'une quelconque des revendications précédentes, **caractérisée en ce que** le tuyau de chemisage comprend en outre au moins un film extérieur, qui est agencé sur le côté, détourné du film intérieur, de la surface des bandes fibreuses.

8. Utilisation selon la revendication 7, **caractérisée en ce que** ledit au moins un film extérieur comprend, au moins sur le côté tourné vers la bande fibreuse ou les bandes fibreuses imprégnées de résine, un renforcement et/ou un armement sous la forme d'un non-tissé, d'un feutre, d'un tissu et/ou d'une nappe, notamment d'un laminage de non-tissé.

9. Utilisation selon l'une quelconque des revendications précédentes, **caractérisée en ce que** le film intérieur en forme de tuyau comprend un renforcement ou un armement sur la surface tournée vers la bande fibreuse ou les bandes fibreuses à l'état monté.

10. Utilisation selon l'une quelconque des revendications précédentes, **caractérisée en ce que** le film intérieur en forme de tuyau comprend des groupes fonctionnels sur la surface tournée vers la bande fibreuse ou les bandes fibreuses à l'état monté.

11. Utilisation selon l'une quelconque des revendications précédentes, **caractérisée en ce que** le film intérieur en forme de tuyau comprend un traitement antibactérien.

12. Tuyau de chemisage pour la rénovation de systèmes de conduction chargés en pression, qui sont exploités à une pression qui se situe au-dessus de la pression atmosphérique, comprenant au moins un film intérieur en forme de tuyau sans soudure et au moins une couche durcissable d'au moins une bande fibreuse imprégnée avec une résine durcissable appliquée directement ou indirectement sur ledit au moins un film intérieur en forme de tuyau, **caractérisé en ce que** le film intérieur comprend des groupes fonctionnels et/ou un renforcement sur la surface tournée vers la bande fibreuse imprégnée de résine à l'état monté, et le film intérieur est un film composite multicouche, qui présente une épaisseur de film de 100 à 1 000 µm.
